# EUROPÄISCHE PATENTANMELDUNG

(11) **EP 3 109 632 A1**
(43) Veröffentlichungstag der Anmeldung: **28.12.2016**
(21) Anmeldenummer: 16168013.7
(22) Anmeldetag: 03.05.2016
(51) Int. Cl.: G01N 27/84

(54) **VERFAHREN ZUR ZERSTÖRUNGSFREIEN PRÜFUNG EINES BAUTEILS**

(30) Priorität: 15.06.2015 DE 102015210946
(71) Anmelder: Siemens Aktiengesellschaft, 80333 München (DE)
(72) Erfinder: Sczepurek, Tristan, 13129 Berlin (DE)

(57) **Zusammenfassung**

Verfahren zur zerstörungsfreien Prüfung eines Bauteils unter Einsatz einer Prüfungsvorrichtung, die eine Magnetfelderzeugungseinheit umfasst, wobei das Bauteil magnetisiert wird, um Informationen über Fehler wie Risse oder dergleichen in dem Bauteil zu erhalten, umfassend die Schritte: a) Kontaktelemente der Magnetfelderzeugungseinheit werden auf gegenüberliegenden Seiten eines zu prüfenden Bauteilbereichs mit dem Bauteil in Kontakt gebracht, b) der zu prüfende Bauteilbereich wird mittels der Magnetfelderzeugungseinheit magnetisiert, um ein Magnetfeld innerhalb des Bauteilbereichs mit kreisförmigen und senkrecht zu einer Längsrichtung des Bauteilbereichs verlaufenden Feldlinien oder mit parallel zur Längsrichtung des Bauteilbereichs verlaufenden Feldlinien zu erzeugen, c) ferromagnetische Partikel werden während der Magnetisierung auf den zu prüfenden Bauteilbereich aufgebracht, und d) der Bauteilbereich wird optisch kontrolliert, dadurch gekennzeichnet, dass Kontaktelemente verwendet werden, deren mit dem Bauteil in Berührung kommende Kontaktflächen mit Nuten versehen sind, die zum Rand der Kontaktflächen hin offen ausgebildet sind, und dass die ferromagnetischen Partikel in die Nuten eingebracht werden.

## Beschreibung

Die Erfindung betrifft ein Verfahren zur zerstörungsfreien Prüfung eines Bauteils unter Einsatz einer Prüfungsvorrichtung, die eine Magnetfelderzeugungseinheit umfasst, wobei das Bauteil magnetisiert wird, um Informationen über Fehler wie Risse oder dergleichen in dem Bauteil zu erhalten, umfassend die Schritte:
a) Kontaktelemente der Magnetfelderzeugungseinheit werden auf gegenüberliegenden Seiten eines zu prüfenden Bauteilbereichs mit dem Bauteil in Kontakt gebracht,
b) der zu prüfende Bauteilbereich wird mittels der Magnetfelderzeugungseinheit magnetisiert, um ein Magnetfeld innerhalb des Bauteilbereichs mit kreisförmigen und senkrecht zu einer Längsrichtung des Bauteilbereichs verlaufenden Feldlinien oder mit parallel zur Längsrichtung des Bauteilbereichs verlaufenden Feldlinien zu erzeugen,
c) ferromagnetische Partikel werden während der Magnetisierung auf den zu prüfenden Bauteilbereich aufgebracht, und
d) der Bauteilbereich wird optisch kontrolliert.

Ferner betrifft die Erfindung eine Prüfungsvorrichtung zur zerstörungsfreien Prüfung eines Bauteils mit einer Magnetfelderzeugungseinheit, die Kontaktelemente umfasst, die mit dem Bauteil in Berührung kommende Kontaktflächen aufweisen.

Um Bauteile auf das Vorhandensein von Fehlern, wie Risse zu untersuchen, sind diverse Verfahren aus dem Stand der Technik bekannt. Neben dem Ultraschall- oder Wirbelstromprüfverfahren ist die Magnetpulverprüfung ein gängiges Verfahren zur zerstörungsfreien Prüfung eines Bauteils. Bei der Magnetpulverprüfung handelt es sich um das empfindlichste Verfahren zum Nachweis von Oberflächenrissen in ferromagnetischen Materialen.

Der zu prüfende Bauteilbereich wird bei der Magnetpulverprüfung magnetisiert. Durch Risse und Oberflächenfehlstellen, die quer zu den Feldlinien liegen, wird ein magnetisches Streufeld erzeugt. Hierbei entsteht aufgrund der geringeren Permeabilität der Luft ein bogenförmiger Verlauf der Feldlinien oberhalb des Risses. Dies hat die Entstehung von Magnetpolen an den gegenüberliegenden Seiten des Risses zur Folge. Infolge der nun wirkenden Anziehungskräfte werden auf den zu prüfenden Bauteilbereich aufgebrachte, ferromagnetische Partikel angezogen, wodurch der Riss sichtbar wird.

Risse, die parallel zu den Feldlinien verlaufen, erzeugen hierbei kein Streufeld und können somit nicht nachgewiesen werden. Daher wird innerhalb des Bauteilbereichs einmal ein Magnetfeld erzeugt, dessen Feldlinien in Längsrichtung des Bauteilbereichs verlaufen und einmal ein Magnetfeld erzeugt, dessen Feldlinien kreisförmig und senkrecht zur Längsrichtung des Bauteilbereichs verlaufen. Um den Bauteilbereich entsprechend zu magnetisieren, werden Kontaktelemente an gegenüberliegenden Seiten des zu prüfenden Bauteilbereichs mit dem Bauteil in Kontakt gebracht.

Die aus dem Stand der Technik bekannte Magnetpulverprüfung hat sich bewährt. Es wird jedoch als nachteilig erachtet, dass auf die Bereiche des Bauteils, die mit Kontaktflächen der Kontaktelemente in Berührung kommen, keine ferromagnetischen Partikel aufgebracht werden können. Somit können diese Bereiche des Bauteils bisher nicht in einer Aufspannung geprüft werden.

Ausgehend von dem Stand der Technik ist es eine Aufgabe der vorliegenden Erfindung, ein Verfahren und eine Prüfvorrichtung der eingangs genannten Art anzugeben, welches es ermöglicht, die mit den Kontaktflächen in Berührung stehenden Bereiche des Bauteils in einer Aufspannung zu prüfen.

Diese Aufgabe wird bei einem Verfahren der eingangs genannten Art dadurch gelöst, dass Kontaktelemente verwendet werden, deren mit dem Bauteil in Berührung kommende Kontaktflächen mit Nuten versehen sind, die zum Rand der Kontaktflächen hin offen ausgebildet sind, und dass die ferromagnetischen Partikel in die Nuten eingebracht werden.

Entsprechend schafft die vorliegende Erfindung ferner eine Prüfungsvorrichtung der eingangs genannten Art, die dadurch gekennzeichnet ist, dass die Kontaktflächen mit Nuten versehen sind, die zum Rand der Kontaktfläche offen ausgebildet sind.

Der Erfindung liegt somit die Überlegung zugrunde, die Kontaktflächen mit Nuten zu versehen, in welche ferromagnetische Partikel eingebracht werden können, sodass sie zwischen den Stirnflächen des zu prüfenden Bauteils und den Kontaktflächen liegen. Dabei begrenzen die Nuten Kontaktteilflächen, die mit dem Bauteil in Berührung stehen und mittels derer der zu prüfende Bauteilbereich ausreichend magnetisiert werden kann. Während der Magnetisierung des Bauteils sammeln sich auch an den auf den Stirnflächen befindlichen Rissen ferromagnetische Partikel an, die in die Nuten der Kontaktflächen eingebracht werden. Aufgrund des nach der Magnetisierung noch bestehenden Restmagnetismus, kann das Bauteil einschließlich seiner Stirnflächen nach dem Entfernen der Kontaktelemente optisch kontrolliert werden. Hierdurch wird die Detektion von Rissen auch in den Stirnflächen des Bauteils in einer Aufspannung ermöglicht.

Die ferromagnetischen Partikel können in Pulverform auf das zu prüfende Bauteil aufgebracht werden. Gemäß einer Ausführungsform der Erfindung ist jedoch vorgesehen, dass eine Prüfungssuspension, welche ferromagnetische Partikel enthält, in Schritt c) über den zu prüfenden Bauteilbereich gesprüht oder gegossen wird. Hierdurch wird das Einbringen der ferromagnetischen Partikel in die Nuten erleichtert. Dabei kann eine Öl oder Wasser umfassende Prüfungssuspension verwendet werden. Öle zeigen eine gute Benetzbarkeit des zu prüfenden Bauteilbereichs. Sie sind viskoser als Wasser und haben somit eine deutlich längere Abtropfzeit. Wenn alternativ Wasser statt Öl verwendet wird, wird diesem üblicherweise ein Entspannungsmittel, insbesondere in Form von Tensiden, zugesetzt, um die Benetzung des gesamten zu prüfenden Bauteilbereichs zu gewährleisten.

In üblicher Weise können ferromagnetische Partikel verwendet werden, die Eisen umfassen oder daraus bestehen. Hiermit wurden sehr gute und reproduzierbare Ergebnisse erzielt.

Ferner können fluoreszierende, ferromagnetische Partikel eingesetzt werden. Dann wird beim optischen Kontrollieren in Schritt d) in einem abgedunkelten Bereich UV-Strahlung auf den Bauteilbereich eingestrahlt. Hierdurch wird der Kontrast zwischen den ferromagnetischen Partikeln und dem Bauteil erhöht und somit das optische Kontrollieren des zu prüfenden Bauteilbereichs erleichtert.

Um sowohl Risse in Längsrichtung des Bauteilbereichs als auch Risse in Querrichtung des Bauteilbereichs zu detektieren, können nach der Durchführung von Schritt c) die Schritte b) und c) mit einem Magnetfeld wiederholt werden, das Feldlinien aufweist, die senkrecht zu den Feldlinien des vorherigen Magnetfelds verlaufen. Hierbei wird bevorzugt zur Erzeugung des Magnetfeldes eine magnetische Feldstärke verwendet, die geringer als die Koerzitivfeldstärke der zuvor verwendeten ferromagnetischen Partikel ist. Hierdurch wird gewährleistet, dass die ferromagnetischen Partikel, die sich zuvor an den Rissen angesammelt haben, weiterhin an dieser Position bleiben. Während der Magnetisierung wird wiederum eine weitere Prüfungssuspension auf das zu prüfende Bauteil gesprüht. Die weitere Prüfungssuspension umfasst weitere ferromagnetische Partikel, die vorzugsweise eine geringere Koerzitivfeldstärke aufweisen als die zuvor verwendeten ferromagnetischen Partikel und somit leichter zu magnetisieren sind als diese.

Zweckmäßiger Weise können die Nuten in Form von sich kreuzenden Längsnuten und Quernuten ausgebildet sein, die sich jeweils von einem Rand der Kontaktfläche zum gegenüberliegenden Rand der Kontaktfläche erstrecken. Hierdurch wird eine gitterartige Nutenstruktur gebildet, die das gleichmäßige Einbringen der ferromagnetischen Partikel in den Bereich zwischen Bauteil und Kontaktelement gewährleisten. Dabei können zweckmäßigerweise die Längsnuten und die Quernuten jeweils parallel zueinander angeordnet sein. In bevorzugter Weise verlaufen die Längsnuten und Quernuten geradlinig und sind senkrecht zueinander ausgerichtet. Hierdurch begrenzen die Längs- und Quernuten rechteckige oder quadratische Kontaktteilflächen, mittels derer eine ausreichende Magnetisierung des zu prüfenden Bauteilbereichs gewährleistet werden kann.

Gemäß einer bevorzugten Ausführungsform der Erfindung sind die Längsnuten und die Quernuten jeweils geneigt zur Vertikalen angeordnet, und zwar insbesondere unter einem Winkel von 45°. Hierdurch wird das gleichmäßige Einbringen der ferromagnetischen Partikel erleichtert.

Die Kontaktelemente können in Form von lösbar mit der Magnetisierungseinheit verbindbaren Aufsätzen ausgebildet sein. Hierdurch können in Abhängigkeit von der Geometrie des zu prüfenden Bauteilbereichs verschiedene Kontaktelemente verwendet werden.

Weiterhin können die Kontaktelemente aus Kupfer ausgebildet sein. Aufgrund seiner sehr guten elektrischen Leitfähigkeit, eignet sich Kupfer besonders, um die Kontaktflächen zur Magnetisierung des zu prüfenden Bauteilbereichs leitend mit einer Stromquelle zu verbinden.

In an sich bekannter Weise kann die Magnetfelderzeugungseinheit ausgebildet sein, um den zu prüfenden Bauteilbereich über die Kontaktflächen leitend mit einer Kontaktstromquelle zu verbinden und damit ein Magnetfeld innerhalb des Bauteilbereichs zu erzeugen, das kreisförmige und senkrecht zu einer Längsrichtung des Bauteilbereichs verlaufende Feldlinien aufweist. Hierdurch wird die Detektion von Rissen, die in Längsrichtung des zu prüfenden Bauteilbereiches verlaufen, ermöglicht.

Ebenso kann die Magnetfelderzeugungseinheit ein Joch mit zwei Jochschenkeln und eine stromdurchflossene Spule umfassen, die um das Joch gewickelt ist, wobei die Kontaktelemente an den Innenseiten der Jochschenkel angeordnet sind und die stromdurchflossene Spule ausgebildet ist, um ein Magnetfeld innerhalb des Bauteilbereichs zu erzeugen, dessen Feldlinien parallel zur Längsrichtung des Bauteilbereichs verlaufen. Hierdurch wird die Detektion von Rissen, die senkrecht zur Längsrichtung des Bauteilbereiches verlaufen, ermöglicht.

Alternativ können solche Risse mittels einer Magnetfelderzeugungseinheit, die eine stromdurchflossene Spule zur kontaktlosen Prüfung umfasst, detektiert werden. Dabei ist die stromdurchflossene Spule ausgebildet, um ein Magnetfeld innerhalb des Bauteilbereichs zu erzeugen, dessen Feldlinien parallel zur Längsrichtung des Bauteilbereichs verlaufen. Hierbei ist der zu prüfende Bauteilbereich während der Prüfung innerhalb der stromdurchflossenen Spule angeordnet.

Weitere Merkmale und Vorteile der vorliegenden Erfindung werden anhand der nachfolgenden Beschreibung einer Ausführungsform einer erfindungsgemäßen Prüfungsvorrichtung und der Bezugnahme auf die beiliegenden Zeichnungen deutlich. Darin ist
- Figur 1: eine schematische Ansicht einer Prüfungsvorrichtung gemäß einer Ausführungsform der vorliegenden Erfindung,
- Figur 2: eine schematische Ansicht eines Kontaktelements gemäß der Ausführungsform der vorliegenden Erfindung.

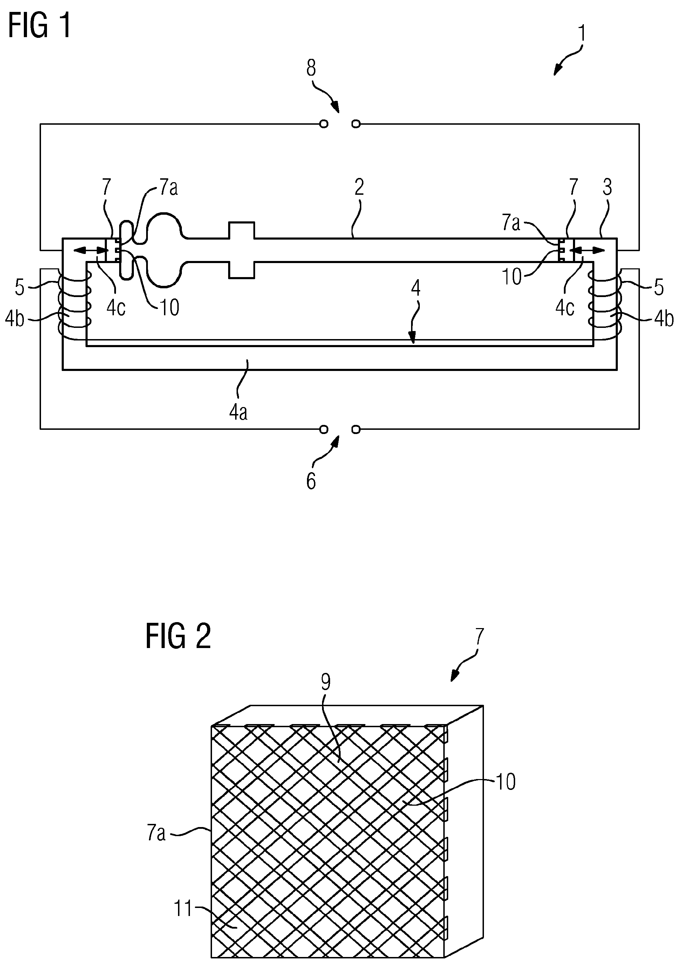

Die Figur 1 zeigt eine Prüfungsvorrichtung 1 zur zerstörungsfreien Prüfung eines Bauteils 2 gemäß einer Ausführungsform der vorliegenden Erfindung. Mittels dieser kann ein zu prüfendes Bauteil 2 magnetisiert werden, um Informationen über Fehler wie Risse oder dergleichen zu erhalten.

Die Prüfungsvorrichtung 1 umfasst eine Magnetfelderzeugungseinheit 3. Diese umfasst ein etwa U-förmiges Joch 4 mit einem langen Basissteg 4a und zwei daran endseitig angesetzten kurzen Jochschenkeln 4b. Weiterhin gehört zu der Magnetfelderzeugungseinheit 3 eine stromdurchflossene Spule 5, die um das Joch 4 gewickelt und mit einer Stromquelle 6 verbunden ist. Schließlich umfasst die Magnetfelderzeugungseinheit 3 Kontaktelemente 7, die innenseitig an den freien Enden der Jochschenkel 4b angeordnet und leitend mit einer Kontaktstromquelle 8 verbunden sind.

Die Kontaktelemente 7 sind in Form von lösbar mit den Jochschenkeln 4b verbindbaren Aufsätzen ausgebildet, sodass verschiedene Kontaktelemente 7 entsprechend der jeweiligen Anwendungserfordernisse in Bezug auf die Geometrie des zu prüfenden Bauteils 2 verwendet werden können. Hierzu sind an den freien Enden der Jochschenkel 4b innenseitig ab ragende Haltestege 4c ausgebildet, auf welche die Kontaktelemente 7 aufgesteckt sind. Dabei ist ein Kontaktelement 7 oder sind beide Kontaktelemente 7 an dem korrespondierenden Haltesteg 4c in der Längsrichtung des Basisstegs 4a verstellbar gehalten, um den Abstand zwischen den an den Jochschenkeln 4b angeordneten Kontaktelementen 7 zu variieren. Die Kontaktelemente 7 sind aus Kupfer ausgebildet, wodurch eine sehr gute elektrische Leitfähigkeit gewährleistet ist.

Wie in der Figur 2 dargestellt ist, sind in den Kontaktflächen 7a, über welche die Kontaktelement 7 mit einem zu prüfenden Bauteil 2 in Kontakt kommen, mit einer Gitterstruktur aus parallel zueinander angeordneten, geradlinig verlaufenden Längsnuten 9 und mehreren senkrecht zu den Längsnuten 9 verlaufenden, geradlinigen Quernuten 10 versehen, die sich jeweils von einem Rand der Kontaktfläche 7a zum gegenüberliegenden Rand der Kontaktfläche 7a erstrecken. Auf diese Weise bilden die Längsnuten 9 und Quernuten 10 eine gitterartige Nutenstruktur mit dazwischen liegenden quadratischen Kontaktteilflächen 11.

Zur Prüfung eines Bauteils 2 wird dieses zwischen den Kontaktelementen 7 fixiert, insbesondere eingespannt, und dabei werden die Kontaktflächen 7a der Kontaktelemente 7 auf gegenüberliegenden Seiten des zu prüfenden Bauteils 2 mit dem Bauteil 2 in Berührung gebracht. Hierbei werden die Kontaktelemente 7 so ausgerichtet, dass die Längs- und Quernuten 9,10 unter einem Winkel von 45° zur Vertikalen verlaufen. Anschließend wird das zu prüfende Bauteil 2 mittels der Magnetfelderzeugungseinheit 3 magnetisiert. Dabei wird über die Kontaktflächen 7a ein Strom durch das zu prüfende Bauteil 2 geleitet, um ein Magnetfeld innerhalb des Bauteils 2 mit kreisförmigen und senkrecht zu einer Längsrichtung des Bauteils 2 verlaufenden Feldlinien zu erzeugen.

Während der Magnetisierung wird eine Prüfungssuspension, welche ferromagnetische Partikel enthält, auf das zu prüfende Bauteil 2 und in die zum Rand der Kontaktflächen 7a offen ausgebildeten Nuten 9, 10 gesprüht. Die hierbei verwendete Prüfungssuspension umfasst Öl, und die verwendeten ferromagnetischen Partikel weisen Eisen auf und sind fluoreszierend. Diese flüssige Prüfungssuspension wird von oben in die unter einem Winkel von 45° zur Vertikalen geneigten Längs- und Quernuten 9, 10 gesprüht, wo sie sich aufgrund der Nutneigung gleichmäßig verteilt.

Durch Risse und Oberflächenfehlstellen, die quer zu den Feldlinien liegen, wird ein magnetisches Streufeld erzeugt. Hierbei entsteht aufgrund der geringeren Permeabilität der Luft ein bogenförmiger Verlauf der Feldlinien oberhalb der Risse. Dies hat die Entstehung von Magnetpolen an den gegenüberliegenden Seiten der Risse zur Folge. Infolge der nun wirkenden Anziehungskräfte werden auf das zu prüfende Bauteil 2 aufgebrachte, ferromagnetische Partikel angezogen, wodurch die Risse sichtbar werden.

Risse, die parallel zu den Feldlinien verlaufen, erzeugen hierbei kein Streufeld und können somit nicht nachgewiesen werden. Daher wird das zu prüfende Bauteil 2 anschließend mittels der Magnetfelderzeugungseinheit 3 ein weiteres Mal magnetisiert. Dabei wird die Spule 5 von einem elektrischen Strom durchflossen, um ein Magnetfeld innerhalb des Bauteils 2 mit parallel zur Längsrichtung des Bauteils 2 verlaufenden Feldlinien zu erzeugen. Hierbei wird zur Erzeugung des Magnetfeldes eine magnetische Feldstärke verwendet, die geringer als die Koerzitivfeldstärke der zuvor verwendeten ferromagnetischen Partikel ist. Hierdurch bleiben die ferromagnetischen Partikel, die sich zuvor an den Rissen angesammelt haben, weiterhin an dieser Position. Während der Magnetisierung wird wiederum weitere Prüfungssuspension auf das zu prüfende Bauteil 2 gesprüht. Die weitere Prüfungssuspension umfasst weitere ferromagnetische Partikel, die eine geringere Koerzitivfeldstärke aufweisen als die zuvor verwendeten ferromagnetischen Partikel und somit leichter zu magnetisieren sind als diese.

Anschließend werden die Kontaktelemente 7 von den Stirnflächen des Bauteils 2 entfernt und das Bauteil 2 wird optisch kontrolliert. Durch den nach der Magnetisierung noch vorhandenen Restmagnetismus bleiben die ferromagnetischen Partikel und die weiteren ferromagnetischen Partikel an den Rissen, an denen sie sich während der Magnetisierung angesammelt haben. Hierdurch wird es ermöglicht die optische Kontrolle nach Entfernen der Kontaktelemente 7 durchzuführen. Bei der optischen Kontrolle wird in einem abgedunkelten Bereich UV-Strahlung auf das Bauteil 2 eingestrahlt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur zerstörungsfreien Prüfung eines Bauteils (2) unter Einsatz einer Prüfungsvorrichtung (1), die eine Magnetfelderzeugungseinheit (3) umfasst, wobei das Bauteil (2) magnetisiert wird, um Informationen über Fehler wie Risse oder dergleichen in dem Bauteil (2) zu erhalten, umfassend die Schritte:
a) Kontaktelemente (7) der Magnetfelderzeugungseinheit (3) werden auf gegenüberliegenden Seiten eines zu prüfenden Bauteilbereichs (2) mit dem Bauteil (2) in Kontakt gebracht,
b) der zu prüfende Bauteilbereich (2) wird mittels der Magnetfelderzeugungseinheit (3) magnetisiert, um ein Magnetfeld innerhalb des Bauteilbereichs (2) mit kreisförmigen und senkrecht zu einer Längsrichtung des Bauteilbereichs (2) verlaufenden Feldlinien oder mit parallel zur Längsrichtung des Bauteilbereichs (2) verlaufenden Feldlinien zu erzeugen,
c) ferromagnetische Partikel werden während der Magnetisierung auf den zu prüfenden Bauteilbereich (2) aufgebracht, und
d) der Bauteilbereich (2) wird optisch kontrolliert, **dadurch gekennzeichnet, dass**
Kontaktelemente (7) verwendet werden,
deren mit dem Bauteil (2) in Berührung kommende Kontaktflächen (7a) mit Nuten (9; 10) versehen sind,
die zum Rand der Kontaktflächen (7a) hin offen ausgebildet sind und
dass die ferromagnetischen Partikel in die Nuten (9; 10) eingebracht werden.

2. Verfahren nach Anspruch 1,
**dadurch gekennzeichnet, dass**
eine Prüfungssuspension, welche ferromagnetische Partikel enthält, in Schritt c) über den zu prüfenden Bauteilbereich (2) gesprüht oder gegossen wird.

3. Verfahren nach Anspruch 2,
**dadurch gekennzeichnet, dass**
eine Öl oder Wasser umfassende Prüfungssuspension verwendet wird.

4. Verfahren nach einem der vorhergehenden Ansprüche,
**dadurch gekennzeichnet, dass** ferromagnetische Partikel verwendet werden,
die Eisen umfassen oder daraus bestehen.

5. Verfahren nach einem der vorhergehenden Ansprüche,
**dadurch gekennzeichnet, dass**
fluoreszierende, ferromagnetische Partikel verwendet werden.

6. Verfahren nach Anspruch 5,
**dadurch gekennzeichnet, dass**
beim optischen Kontrollieren in Schritt d) in einem abgedunkelten Bereich UV-Strahlung auf den Bauteilbereich (2) eingestrahlt wird.

7. Verfahren nach einem der vorhergehenden Ansprüche,
**dadurch gekennzeichnet, dass**
nach der Durchführung von Schritt c) die Schritte b) und c) wiederholt werden.

8. Prüfungsvorrichtung (1)
zur zerstörungsfreien Prüfung eines Bauteils (2) mit einer Magnetfelderzeugungseinheit (3), die Kontaktelemente (7) umfasst,
die mit dem Bauteil (2) in Berührung kommende Kontaktflächen (7a) aufweisen,
**dadurch gekennzeichnet, dass**
die Kontaktflächen (7a) mit Nuten (9; 10) versehen sind, die zum Rand der Kontaktfläche (7a) offen ausgebildet sind.

9. Prüfungsvorrichtung (1) nach Anspruch 8,
**dadurch gekennzeichnet, dass**
die Nuten (9; 10) in Form von sich kreuzenden Längsnuten (9) und Quernuten (10) ausgebildet sind,
die sich jeweils von einem Rand der Kontaktfläche (7a) zum gegenüberliegenden Rand der Kontaktfläche (7a) erstrecken.

10. Prüfungsvorrichtung (1) nach Anspruch 9,
**dadurch gekennzeichnet, dass**
die Längsnuten (9) und die Quernuten (10) jeweils parallel zueinander angeordnet sind.

11. Prüfungsvorrichtung (1) nach Anspruch 9 oder 10,
**dadurch gekennzeichnet, dass**
die Längsnuten (9) und/oder
die Quernuten (10) geradlinig ausgebildet sind.

12. Prüfungsvorrichtung (1) nach den Ansprüchen 10 oder 11, **dadurch gekennzeichnet, dass**
die Längsnuten (9) und die Quernuten (10) insbesondere unter einem Winkel von 45° geneigt zur Vertikalen angeordnet sind.

13. Prüfungsvorrichtung (1) nach einem der Ansprüche 8 bis 12,
**dadurch gekennzeichnet, dass**
die Kontaktelemente (7) in Form von lösbar mit der Magnetisierungseinheit (3) verbindbaren Aufsätzen ausgebildet sind.

14. Prüfungsvorrichtung (1) nach einem der Ansprüche 8 bis 13,
**dadurch gekennzeichnet, dass**
die Kontaktelemente (7) aus Kupfer ausgebildet sind.

15. Prüfungsvorrichtung (1) nach einem der Ansprüche 8 bis 14,
**dadurch gekennzeichnet, dass**
die Magnetfelderzeugungseinheit (3) ausgebildet ist,
um den zu prüfenden Bauteilbereich (2) über die Kontaktflächen (7a) leitend mit einer Kontaktstromquelle (8) zu verbinden und
damit ein Magnetfeld innerhalb des Bauteilbereichs (2) zu erzeugen, das kreisförmige und senkrecht zu einer Längsrichtung des Bauteilbereichs (2) verlaufende Feldlinien aufweist.

16. Prüfungsvorrichtung (1) nach einem der Ansprüche 8 bis 15,
**dadurch gekennzeichnet, dass**
die Magnetfelderzeugungseinheit (3) ein Joch (4) mit zwei Jochschenkeln (4b) und eine stromdurchflossene Spule (5) umfasst,
die um das Joch (4) gewickelt ist,
wobei die Kontaktelemente (7)an den Innenseiten der Jochschenkel (4b) angeordnet sind und
die stromdurchflossene Spule (5) ausgebildet ist,
um ein Magnetfeld innerhalb des Bauteilbereichs (2) zu erzeugen, dessen Feldlinien parallel zur Längsrichtung des Bauteilbereichs (2) verlaufen.

17. Prüfungsvorrichtung (1) nach Anspruch 15,
**dadurch gekennzeichnet, dass**
die Magnetfelderzeugungseinheit (3) eine stromdurchflossene Spule zur kontaktlosen Prüfung umfasst,
die ausgebildet ist, um ein Magnetfeld innerhalb des Bauteilbereichs (2) zu erzeugen,
dessen Feldlinien parallel zur Längsrichtung des Bauteilbereichs (2) verlaufen.
